(19) **Europäisches Patentamt / European Patent Office / Office européen des brevets**

(11) **EP 4 752 723 A1**

(12) # EUROPEAN PATENT APPLICATION

(43) Date of publication:
03.06.2026 Bulletin 2026/23

(21) Application number: 25216149.2

(22) Date of filing: 17.11.2025

(51) International Patent Classification (IPC):
*G06F 9/50* (2006.01)    *G06N 20/00* (2019.01)

(52) Cooperative Patent Classification (CPC):
**G06F 9/5072; G06F 9/5083; G06N 3/063;
G06N 3/08; G06N 3/092; G06N 20/00;**
G06F 2209/5019

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **29.11.2024 JP 2024209138**

(71) Applicant: **Fsas Technologies Inc.**
**Nakahara-ku**
**Kawasaki-shi, Kanagawa 211-0012 (JP)**

(72) Inventor: **NOTSU, Takahiro**
**211-0012 Kawasaki-shi, Kanagawa (JP)**

(74) Representative: **Hoffmann Eitle**
**Patent- und Rechtsanwälte PartmbB**
**Arabellastraße 30**
**81925 München (DE)**

(54) **CONTROL PROGRAM, INFORMATION PROCESSING APPARATUS, AND CONTROL METHOD**

(57)    A control program that causes a processor(1) to execute a process. The process includes estimating, during execution of a training program for a machine learning model using a first computing resource and a second computing resource, first performance for a workload of the training program by placing a limitation on performance of the first computing resource. The process includes estimating, after the limitation on the performance of the first computing resource is removed and during execution of the training program, second performance for a workload of the training program by limiting performance of the second computing resource according to a ratio at which the performance of the first computing resource was limited. The process includes identifying, based on a result of comparison between the first performance and the second performance, which one of the first computing resource and the second computing resource is a bottleneck resource.

EP 4 752 723 A1

## Description

FIELD

The embodiment discussed herein is related to a control program, an information processing apparatus, and a control method.

BACKGROUND

A data center (DC) is an institution having consolidated computing resources and plays a vital role in supporting today's information technology (IT) infrastructures, for example. Users of a DC rent needed resources from the DC and perform needed computations. A recent trend is a growing demand for computing dedicated to artificial intelligence (AI), especially for training AI models.

Massive computing resources are needed for training AI models and computing resources are often temporarily procured from the cloud for execution. Performance of computing resources is generally influenced intricately by various factors, such as, central processing units (CPUs), graphics processing units (GPUs), accelerators, memories, storages, and networks, for example. Therefore, computing resources used by a user do not always match the computing demand.

From the perspective of a DC operator, proposing more optimal computing resources to customers who use the DC to execute AI training enables enhancement of the added value of the services the DC operator provides.

That is, there is a need for a mechanism to make a recommendation to a customer by finding the bottleneck resource when the customer runs AI training, in particular, by determining which one of the CPU and the GPU is the bottleneck resource. The program run by the customer for this AI training desirably remains unchanged. That is, there is a need for a method of identifying the bottleneck resource in the execution environment of the AI training application, without modifying the program run by the customer for the AI training.

In such an identification method, the fact that AI training applications are primarily loop-based is utilized to estimate the loop period of the application from changes in CPU usage rate. Specifically, the loop period of the application in a case where the CPU operating frequency is lowered by a predetermined amount is compared with the loop period of the application in a case where the GPU operating frequency is lowered by a predetermined amount. On the basis of a result of this comparison between the loop periods, one of the CPU and the GPU, for which the performance of the AI training application deteriorated more, that is, the one for which the loop period was more increased, is identified as the bottleneck resource.

Patent Literature 1: Japanese Laid-open Patent Publication No. 2021-140264
Patent Literature 2: Japanese Laid-open Patent Publication No. 2010-250689
Patent Literature 3: Japanese Laid-open Patent Publication No. 2018-084994
Patent Literature 4: Japanese Laid-open Patent Publication No. 07-281908
Patent Literature 5: Japanese Laid-open Patent Publication No. 2010-218000

In the method of identifying a bottleneck resource, the CPU operating frequency is changed to identify the bottleneck resource as of the time of execution of the application.

However, sometimes the software is unable to change the operating frequency of the CPU. For example, for some CPU operating modes, the operating system (OS) is unable to freely change the operating frequency of the CPU.

What is more, the basic input/output system (BIOS) settings need to be changed for the CPU's operating mode to be changed. However, in an already operating environment, it is difficult to temporarily reboot and change the BIOS settings. In addition, in a cloud environment, the BIOS is not accessible.

Even if the operating frequency of the CPU is able to be changed, the operating frequency that is able to be set is selected from some candidates and the optimal operating frequency is not always selectable.

Therefore, there is a need for a method enabling bottleneck resources to be identified in execution environments of training programs for machine learning models that are AI learning models, without changing operating frequencies of CPUs.

In one aspect, an object is to provide, for example, a control program that enables bottleneck resources to be identified in execution environments of training programs for machine learning models.

SUMMARY

According to an aspect of an embodiment, a control program causes a processor to execute a process. The process includes estimating, during execution of a training program for a machine learning model using a first computing resource and a second computing resource, first performance for a workload of the training program by placing a limitation on performance of the first computing resource. The process includes estimating, after the limitation on the performance of the first computing resource is removed and during execution of the training program, second performance for a workload of the training program by limiting performance of the second computing resource according to a ratio at which the performance of the first computing resource was limited. The process includes identifying, based on a result of comparison between the first performance and the second performance, which one of the first computing resource and the second computing resource is a bottleneck resource.

According to one aspect, a bottle neck resource is able to be identified in an execution environment of a training program for a machine learning model.

BRIEF DESCRIPTION OF DRAWINGS

FIG. 1 is a schematic diagram illustrating an example of an information processing apparatus according to an embodiment;
FIG. 2 is a diagram illustrating an example of a configuration of an analysis program for the information processing apparatus;
FIG. 3 is a block diagram illustrating an example of a functional configuration of an analysis unit of the information processing apparatus;
FIG. 4 is a diagram illustrating an example where processes are managed using cgroup_root and cgroup_limited;
FIG. 5A is a diagram illustrating an example of a CPU time period of a single thread;
FIG. 5B is a diagram illustrating an example of a CPU time period for multiple threads;
FIG. 6 is a diagram illustrating an example of CPU usage rates during execution of a training program;
FIG. 7 is a diagram illustrating an example of CPU load during the execution of the training program;
FIG. 8 is a diagram illustrating an example of periodic changes before and after limitation of CPU performance;
FIG. 9 is a diagram illustrating an example of presented information;
FIG. 10 is a flowchart illustrating an example of processing operation of the analysis unit, the processing operation being related to an analysis process;
FIG. 11 is a flowchart illustrating an example of processing operation of the analysis unit, the processing operation being related to a first estimation process;
FIG. 12 is a flowchart illustrating an example of processing operation of the analysis unit, the processing operation being related to a loop period estimation process;
FIG. 13 is a flowchart illustrating an example of processing operation of the analysis unit, the processing operation being related to a second estimation process;
FIG. 14 is a diagram illustrating an example of a method of acquiring a cumulative CPU time period at a measurement start time and a cumulative CPU time period at a measurement end time;
FIG. 15 is a flowchart illustrating an example of processing operation of the analysis unit, the processing operation being related to a thread count estimation process;
FIG. 16 is a diagram illustrating an example of an API related to the thread count estimation process;
FIG. 17 is a diagram illustrating an example of a cpu.stat file;
FIG. 18 is a flowchart illustrating an example of processing operation of the analysis unit, the processing operation being related to a cumulative CPU time period acquisition process;
FIG. 19 is a diagram illustrating an example of an API related to the cumulative CPU time period acquisition process; and
FIG. 20 is a flowchart illustrating an example of processing operation of the analysis unit, the processing operation being related to an identification process.

DESCRIPTION OF EMBODIMENT

An embodiment of, for example, a control program will be described hereinafter with reference to the drawings. However, the embodiment described hereinafter is just an example and is not intended to eliminate application of various modified examples and techniques not explicitly described with respect to the embodiment. That is, without departing from the gist of the embodiment, the embodiment may be modified in various ways. Furthermore, each drawing is not intended to include components illustrated therein only and may include any other function.

A. Configuration

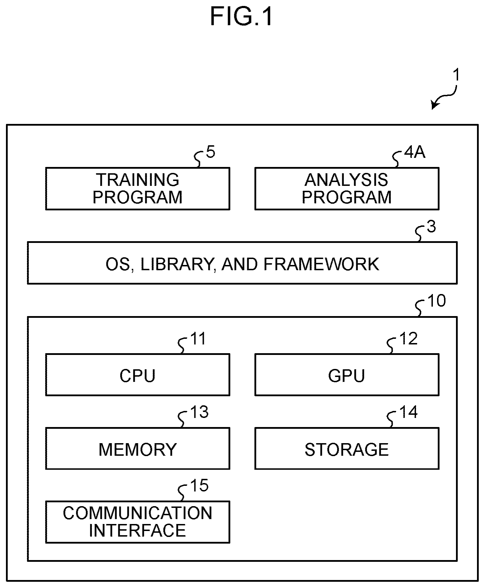

FIG. 1 is a schematic diagram illustrating an example of a configuration of an information processing apparatus 1 according to an embodiment. The information processing apparatus 1 illustrated in FIG. 1 has a hardware platform 10 and a software platform 3. The information processing apparatus 1 is, for example, a computing machine. The software platform 3 is executed on the hardware platform 10. The software platform 3 includes, for example, an operating system (OS), a library, and a framework.

A training program 5 for an AI learning model and an analysis program 4A to analyze bottleneck resources are executed on the software platform 3. The software platform 3 provides a software environment needed for execution of the AI learning model, the training program 5, and the analysis program 4A, for example.

As illustrated in FIG. 1, a hardware configuration of the hardware platform 10 has, for example, a CPU 11, a GPU 12, a memory 13, a storage 14, and a communication interface 15. The CPU 11, the GPU 12, the memory 13, the storage 14, and the communication interface 15 may also be said to be hardware elements.

The CPU 11 is an example of a processing device that performs various control and computation and is also an example of a second computing resource. The CPU 11 may be connected to each block in the hardware platform 10 communicably with each other via a bus not illustrated in the figure. The CPU 11 may be configured to have, for example, a multiprocessor including multiple processors, a multicore processor having multiple processor cores, or a plurality of the multicore processors.

The GPU 12 is a processing device suitable for screen display control for an output device, such as a monitor, and is an example of a first computing resource. Furthermore, the GPU 12 is an example of a processing device that performs various control and computation. The GPU 12 may be connected to each block in the hardware platform 10 communicably with each other via a bus not illustrated in the figure. The processing devices of these hardware elements may also be said to be processor elements. The CPU 11 and the GPU 12 are processor elements.

The memory 13 is an example of hardware that stores information, such as various data and programs. Examples of the memory 13 include a volatile memory, such as a dynamic random access memory (DRAM), or a non-volatile memory, such as a persistent memory (PM).

The storage 14 is an example of hardware that stores information, such as various data and programs. The storage 14 stores therein programs executed by the CPU 11 and the GPU 12, and data used when these programs are executed. The programs include, of course, the AI learning model, which is a machine learning model, as well as the training program 5 for the AI learning model and the analysis program 4A.

The storage 14 may be any of various storage devices including: a magnetic disk device, such as a hard disk drive (HDD); a semiconductor drive device, such as a solid state drive (SSD); and a non-volatile memory. Examples of the non-volatile memory include a flash memory, a storage class memory (SCM), and a read only memory (ROM).

The communication interface 15 is an interface for connection and communication control between the hardware platform 10 and another information processing apparatus. For example, the communication interface 15 may include an adapter that complies with a local area network (LAN), such as Ethernet (registered trademark) or optical communication, such as Fibre Channel (FC). The adapter may be an adapter that is compatible with one or both of wireless and wired communication systems.

For example, the hardware platform 10 may be connected to each of a terminal device and a database, which are not illustrated in the figure, communicably with each other via the communication interface 15 and a network. The above mentioned programs may be downloaded from the network via the communication interface 15 and stored in the storage 14.

The configuration of the hardware platform 10 may be modified as appropriate. For example, in the example illustrated in FIG. 1, one CPU 11, one GPU 12, one memory 13, one storage 14, and one communication interface 15 are included, but two or more CPUs 11, two or more GPUs 12, two or more memories 13, two or more storages 14, and/or two or more communication interfaces 15 may be included. These hardware elements may be replaced with hardware elements higher in performance and may be modified as appropriate.

At least some of the hardware elements included in the hardware platform 10 may be configured to be provided by a cloud service provider. The hardware platform 10 may be configured in combination with hardware elements provided by a cloud service provider to achieve desired performance. The hardware platform 10 having performance sufficient for the training program 5 to be executed may be configured in combination with hardware elements provided by a cloud service provider.

The training program 5 is a program that executes training of the AI learning model. Any of various known training programs may be used as the training program 5 and description thereof will be omitted. The training program 5 is executed using the hardware platform 10.

The training program 5 executes training of the machine learning model, by using the CPU 11 and the GPU 12, which are multiple computing resources.

The analysis program 4A implements a bottleneck analysis function for identifying which one of the CPU 11 and the GPU 12 is a bottleneck resource during execution of the training program 5 using the hardware platform 10. The CPU 11 and the GPU 12 are computing resources that affect execution performance of the training program 5.

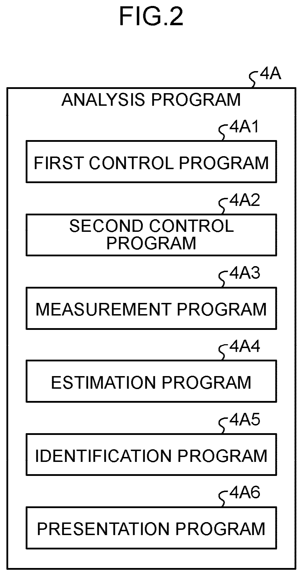

FIG. 2 is a diagram illustrating an example of a configuration of the analysis program 4A for the information processing apparatus 1. The analysis program 4A illustrated in FIG. 2 has a first control program 4A1, a second control program 4A2, a measurement program 4A3, an estimation program 4A4, an identification program 4A5, and a presentation program 4A6.

The first control program 4A1 is a program that limits performance of the GPU 12. The second control program 4A2 is a program that limits performance of the CPU 11. The measurement program 4A3 is a program that measures a usage rate of the CPU 11. The estimation program 4A4 is a program that estimates a first loop period and a second loop period described later. The identification program 4A5 is a program that identifies a bottleneck resource on the basis of a result of comparison between the estimated first loop period and second loop period. The presentation program 4A6 is a program that presents a result of the identification of a bottleneck source, to a user.

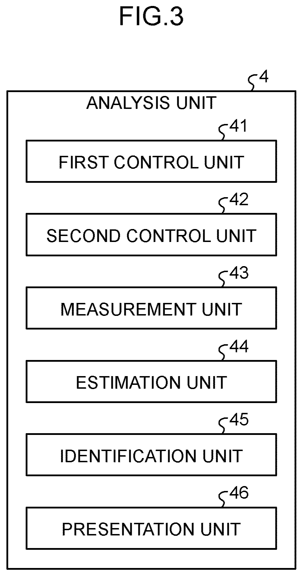

FIG. 3 is a block diagram illustrating an example of a functional configuration of an analysis unit 4 of the information processing apparatus 1. The analysis unit 4 illustrated in FIG. 3 has, as its functions, functions of a first control unit 41, a second control unit 42, a measurement unit 43, an estimation unit 44, an identification unit 45, and a presentation unit 46.

By executing the analysis program 4A, the CPU 11 implements the functions of the analysis unit 4. Furthermore, by executing the first control program 4A1, the CPU 11 implements the functions of the first control unit 41. By executing the second control program 4A2, the CPU 11 implements the functions of the second control unit 42. By executing the measurement program 4A3, the CPU 11 implements the functions of the measurement unit 43. By executing the estimation program 4A4, the CPU 11 implements the functions of the estimation unit 44. By executing the identification program 4A5, the CPU 11 implements the functions of the identification unit 45. By executing the presentation program 4A6, the CPU 11 implements the functions of the presentation unit 46.

The analysis program 4A does not need to include all of the first control program 4A1, the second control program 4A2, the measurement program 4A3, the estimation program 4A4, the identification program 4A5, and the presentation program 4A6. For example, at least some of the first control program 4A1, the second control program 4A2, the measurement program 4A3, the estimation program 4A4, the identification program 4A5, and the presentation program 4A6 may be provided externally to the analysis program 4A, and such a program or programs provided externally may be called and executed by the analysis program 4A.

The analysis program 4A for implementing the functions of the first control unit 41, the second control unit 42, the measurement unit 43, the estimation unit 44, the identification unit 45, and the presentation unit 46 is provided in, for example, a form of being recorded in a computer-readable recording medium. The recording medium is, for example, a flexible disk, a CD (such as a CD-ROM, a CD-R, or a CD-RW), a DVD (such as a DVD-ROM, a DVD-RAM, a DVD-R, a DVD+R, a DVD-RW, a DVD+RW, or an HD DVD), a Bluray Disk, a magnetic disk, an optical disk, or a magnetooptical disk. The CPU 11 then reads the program from the recording medium, transfers and stores the read program into an internal storage device, such as the memory 13, for example, or to an external storage device, such as the storage 14, for example, and uses the program therefrom. Any other modification is possible as appropriate, and for example, the program may be recorded in a recording medium, such as a magnetic disk, an optical disk, or a magnetooptical disk, and provided to a computer via a communication path from the recording medium.

When the functions of the first control unit 41, the second control unit 42, the measurement unit 43, the estimation unit 44, the identification unit 45, and the presentation unit 46 are implemented, the program stored in the memory 13 is executed by the CPU 11 of the computer. The program recorded in the recording medium may be read and executed by the computer.

First Control Unit 41

The first control unit 41 controls performance of the GPU 12. Specifically, the first control unit 41 implements a function of changing (setting) the operating frequency of the GPU 12. For example, by executing a command for setting the operating frequency of the GPU 12, the first control unit 41 changes the operating frequency of the GPU 12.

For example, for a GPU 12 manufactured by NVIDIA (registered trademark), the first control unit 41 may set the operating frequency of the GPU 12 by using an nvidia-smi command. For example, the first control unit 41 is able to set the operating frequency of the GPU 12 manufactured by NVIDIA to 866 MHz, by executing the following command.

# nvidia-smi -ac 1593,866

For example, the first control unit 41 limits the performance of the GPU 12 by lowering or clocking down the operating frequency of the GPU 12 for a predetermined time period, for example, 20 seconds, by a predetermined amount, for example, 20%.

Furthermore, by using a similar command, the first control unit 41 is able to return the lowered operating frequency of the GPU 12 to the state before the change, that is, to the operating frequency as of the time before the limitation of the performance.

Second Control Unit 42

The second control unit 42 controls performance of the CPU 11. The second control unit 42 limits the performance of the CPU 11, for example, by using the cgroup (control groups) function in Linux (registered trademark). The cgroup function is a Linux (registered trademark) kernel function that limits and isolates utilization of resources of a process group, for example, the CPU 11 and the memory 13. That is, the cgroup function limits allocation of resources, such as the CPU 11 and the memory 13, to specific processes or threads.

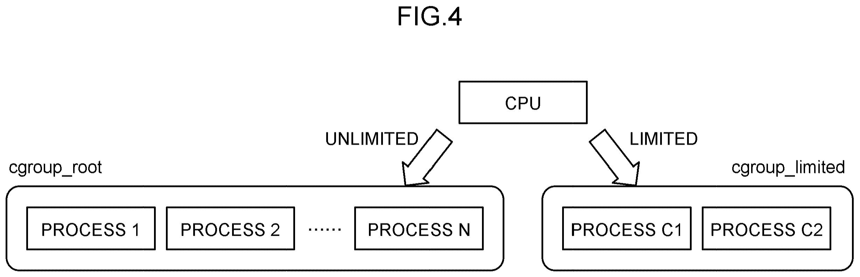

FIG. 4 is a diagram illustrating an example where processes are managed using cgroup_root and cgroup_limited. The cgroup function has cgroup_limited that manages processes for which the performance of the CPU 11 is limited and cgroup_root that manages processes for which the performance of the CPU 11 is not limited. The second control unit 42 limits the performance of the CPU 11 by using cgroup_limited.

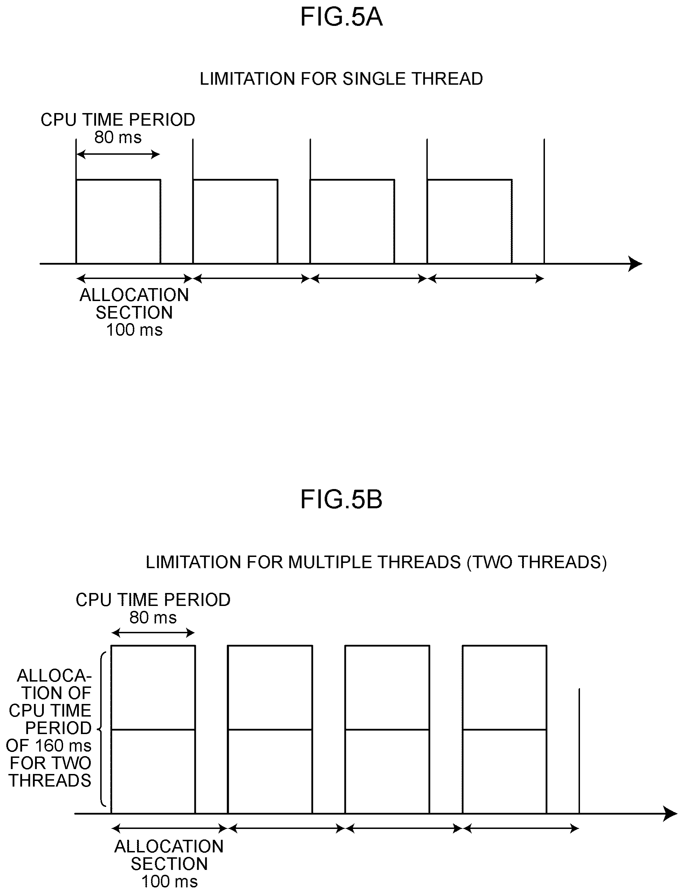

FIG. 5A is a diagram illustrating an example of a CPU time period of a single thread. The CPU performance is specified in terms of the CPU time period allocated within a fixed time period, for example, an allocation section of 100 ms (milliseconds). For example, in a case where a CPU time period of 80 ms is to be allocated within the allocation section of 100 ms, the CPU performance is limited to 80%, which is substantially the same as the operating frequency of the CPU 11 being limited to 80% (a 20% reduction). The CPU resource limitation applies to the entire cgroup.

FIG. 5B is a diagram illustrating an example of a CPU time period for multiple threads. In a case where multiple threads, for example, two threads are used for the CPU 11 and a CPU time period of 80 ms × 2 = 160 ms is allocated within the allocation section of 100 ms, the CPU performance is regarded as being limited to 80%.

The second control unit 42 limits the CPU performance so that the performance is reduced by the same limitation rate (for example, 20%) as the GPU performance.

By using the cgroup function, the second control unit 42 needs to allocate processes of the training program 5 to cgroup_limited for performance limitation, in order to limit the CPU performance. The training program 5 is often executed within a closed environment called Docker. When Docker is started, a dedicated cgroup is automatically secured and a new cgroup thus does not need to be generated. Furthermore, the generated cgroup is included in the following file system directories.

/sys/fs/cgroup/system.slice/docker-<container ID>.scope

In a case where the second control unit 42 limits the GPU performance, for example, the second control unit 42 limits the CPU time period allocated within the allocation section of the CPU 11, according to a limitation rate that is a ratio at which the operating frequency is limited. For example, in a case where the GPU 12 normally operates at 1614 MHz and this operating frequency is to be limited to 866 MHz, the limitation rate of the GPU performance is 53.65%.

For example, in a case where the number of threads used by a workload of the training program 5 is 60 and the CPU performance is not limited, a CPU time period of 100 ms × 60 threads = 6000 ms is allocated in 100 ms that is the allocation section. In contrast, in a case where the CPU performance is to be limited to 53.65%, the second control unit 42 calculates a CPU time period of <allocation section × number of threads used × limitation rate>, for example, <100 ms × 60 threads × 53.65%> = 3219 ms. The second control unit 42 then will allocate the calculated CPU time period of 3219 ms to the allocation section.

Measurement Unit 43

The measurement unit 43 measures the load state of CPU 11, for example, the CPU usage rate, during execution of the training program 5. The measurement unit 43 measures a CPU usage rate in a state where the GPU performance has been limited. Specifically, in the state where the GPU performance has been limited, the measurement unit 43 measures the CPU usage rate of the CPU 11 at 20 ms intervals, for 20 seconds. As a result, the measurement unit 43 acquires CPU usage rates for 1000 samples in a state where the GPU performance has been limited.

Furthermore, the measurement unit 43 measures the CPU usage rate in a state where the CPU performance has been limited during execution of the training program 5. Specifically, in the state where the CPU performance has been limited, the measurement unit 43 measures the CPU usage rate at 20 ms intervals, for 20 seconds. As a result, the measurement unit 43 acquires CPU usage rates for 1000 samples in the state where the CPU performance has been limited.

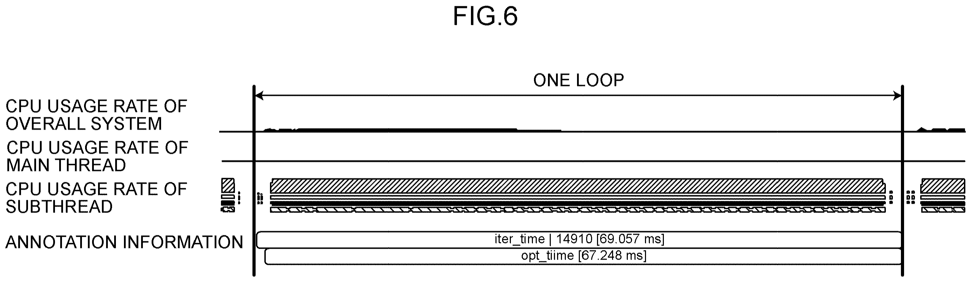

FIG. 6 is a diagram illustrating an example of CPU usage rates during execution of the training program 5. FIG. 6 illustrates a CPU usage rate of the overall system, a CPU usage rate of a main thread, a CPU usage rate of a subthread, and annotation information, in a single loop included in the training program 5.

The annotation information indicates a loop range (a loop start position and a loop end position) on the program. FIG. 6 illustrates that in the signal loop included in the training program 5, the CPU usage rate increases for a command to be sent to the GPU 12. Near the end of the single loop, the CPU usage rate decreases for a wait for reception of computation results returned from the GPU 12 (GPU-to-GPU communication). CPU usage rates are able to be acquired by any of known techniques and description thereof will thus be omitted.

Estimation Unit 44

The estimation unit 44 estimates a period of a loop repeatedly executed by the training program 5, that is, a loop period. On the basis of the CPU usage rate measured by the measurement unit 43 in the state where the GPU performance has been limited, the estimation unit 44 calculates a first loop period that is a loop period during training program execution in the state where the GPU performance has been limited.

Furthermore, on the basis of the CPU usage rate measured by the measurement unit 43 in the state where the CPU performance has been limited at the same limitation rate as the GPU performance, the estimation unit 44 calculates a second loop period that is a loop period during execution of the training program 5 in the state where the CPU performance has been limited.

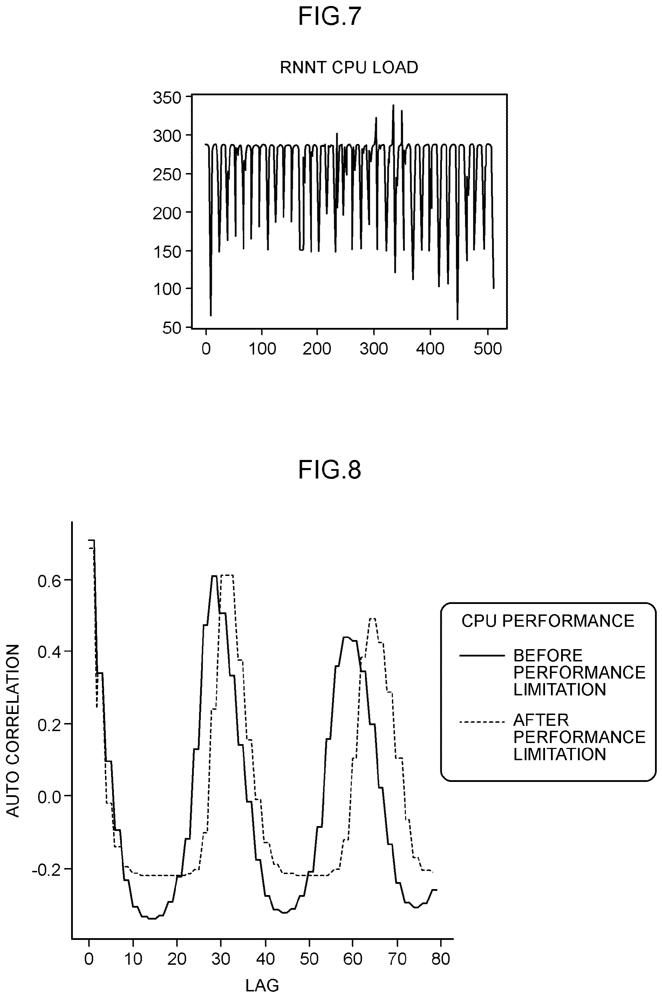

FIG. 7 is a diagram illustrating an example of CPU load during execution of the training program 5. In FIG. 7, the horizontal axis represents the number of samples and the vertical axis represents the CPU load (rnnt CPU load). Most training programs are generally executed in loops. If the interval of one loop iteration is known, the performance (time taken) is able to be estimated. A loop period appears as the period of CPU load fluctuations.

The measurement unit 43 measures the CPU usage rate N times at fixed time intervals for a fixed time period, and the obtained measurement samples are denoted as $s_1, s_2, ..., s_N$. For example, it is assumed herein that the measurement unit 43 has performed measurement at 20 ms intervals for 20 seconds and acquired CPU usage rates corresponding to 1000 measurement samples (in this case, N = 1000).

The estimation unit 44 acquires autocorrelation coefficients $R_k$ for the acquired CPU usage rates by changing the lag k from 1 to N-1. This autocorrelation coefficient is a statistic obtained by Equation 1. In Equation 1, $s_1, s_2, ..., s_N$ are the CPU usages for the measurement samples, N is the number of measurement samples, $\mu$ is the mean of the measurement samples, and $\sigma^2$ is the variance of the measurement samples.

$$R_k = \frac{1}{(N-k)\sigma^2} \sum_{t=1}^{N-k} (s_t - \mu)(s_{t+k} - \mu) \qquad \cdots (1)$$

Among the autocorrelation coefficients acquired per lag k, the lag for which the largest coefficient is acquired is calculated in a range of k > 0. This lag is assumed to be $k_1$. The estimation unit 44 estimates the loop period (the period of CPU load fluctuations) by using <$k_1 \times$ (load measurement interval)>. The load measurement interval is, for example, 20 ms.

FIG. 8 is a diagram illustrating an example of periodic changes before and after limitation of CPU performance. FIG. 8 illustrates relations between lags and autocorrelation, the relations having been calculated on the basis of measurement results of CPU load during execution of the training program 5, with the CPU performance before the limitation and the CPU performance after the limitation in comparison with each other.

In FIG. 8, the relation between the lags and the autocorrelation for the operating frequency (3.5 GHz) of the CPU performance before the limitation is depicted by a solid line, and the relation between the lags and the autocorrelation for the operating frequency (2.1 GHz) of the CPU performance after the limitation is depicted by a broken line.

Peaks occurring at points other than k = 0 represent the estimated period (loop period). FIG. 8 illustrates that the period becomes longer as the waveform shifts to the right, and that the period increases when the operating frequency of the CPU 11 is lowered to 2.1 GHz. As the loop period increases, the execution time of the loop becomes longer, resulting in reduction of processing performance.

Identification Unit 45

The identification unit 45 identifies the computing resource that is a bottleneck resource causing reduction in performance, for example, the CPU 11 or the GPU 12. The identification unit 45 compares the first loop period estimated in the state where the GPU performance has been limited with the second loop period estimated in the state where the CPU performance has been limited. On the basis of a result of the comparison between the first loop period and the second loop period, the identification unit 45 identifies the bottleneck resource by determining which one of the computing resources, the CPU 11 and the GPU 12, has the increased loop period, that is, the reduced workload performance. The computing resource that has been determined to be the bottleneck resource is a computing resource to be improved. That is, the identification unit 45 identifies the computing resource to be improved, by determining which one of the CPU 11 and the GPU 12 is the computing resource to be improved.

Presentation Unit 46

The presentation unit 46 presents presented information indicating the computing resource identified as a bottleneck resource, to a user. The presentation unit 46 presents the presented information indicating the computing resource to be improved identified by the identification unit 45, to the user.

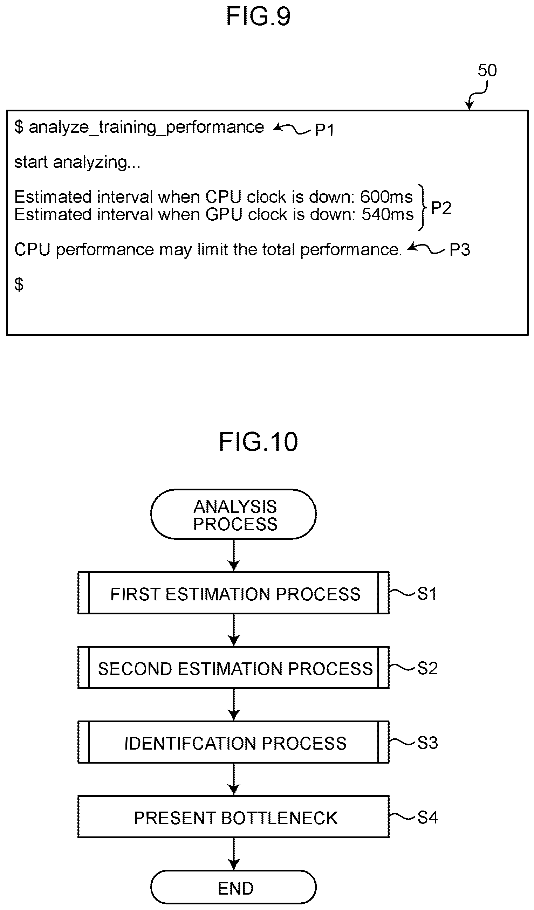

FIG. 9 is a diagram illustrating an example of the presented information. FIG. 9 illustrates a display screen 50 displayed on a monitor of a terminal device (illustration omitted) connected to the hardware platform 10 via a network, for example. The display screen 50 corresponds to the presented information output by the presentation unit 46.

The display screen 50 displays that the analysis program 4A was executed by execution of a command, "analyze_training_performance" (see a reference numeral P1).

Furthermore, the display screen 50 displays the first loop period estimated in the state where the GPU performance has been limited, and the second loop period estimated in the state where the CPU performance has been limited, the first and second loop periods both having been estimated by the estimation unit 44 (see a reference numeral P2). That is, the display screen 50 displays that the second loop period is 600 ms and the first loop period is 540 ms.

In addition, the display screen 50 displays a message indicating the computing resource identified as the bottleneck (see a reference numeral P3).

According to this display screen 50, the second loop period (600 ms) estimated in the state where the CPU performance has been limited is longer than the first loop period (540 ms) estimated in the state where the GPU performance has been limited. As a result, the display screen 50 displays a message sentence, "CPU performance may limit the total performance", indicating the CPU 11 is the bottleneck resource.

The presented information illustrated in FIG. 9 is just an example, and the presented information output by the presentation unit 46 may be modified as appropriate. For example, the presented information may include information other than that illustrated in FIG. 9. Furthermore, the second loop period estimated in the state where the CPU performance has been limited and the first loop period estimated in the state where the GPU performance has been limited, the first and second loop periods both having been estimated by the estimation unit 44, may be omitted, and any other modification may be made as appropriate.

B. Operation

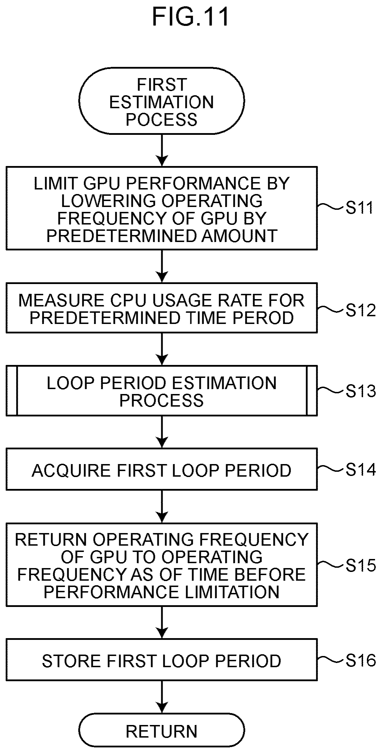

Operation of the information processing apparatus 1 according to the embodiment will be described next. FIG. 10 is a flowchart illustrating an example of processing operation of the analysis unit 4, the processing operation being related to an analysis process. For example, it is assumed that a user of a DC or a user who executes analysis runs the analysis program 4A during execution of the training program 5 to be analyzed. In FIG. 10, the first control unit 41 and the estimation unit 44 in the analysis unit 4 execute a first estimation process illustrated in FIG. 11 (Step S1). The first estimation process is a process of estimating the first loop period in the state where the GPU performance has been limited.

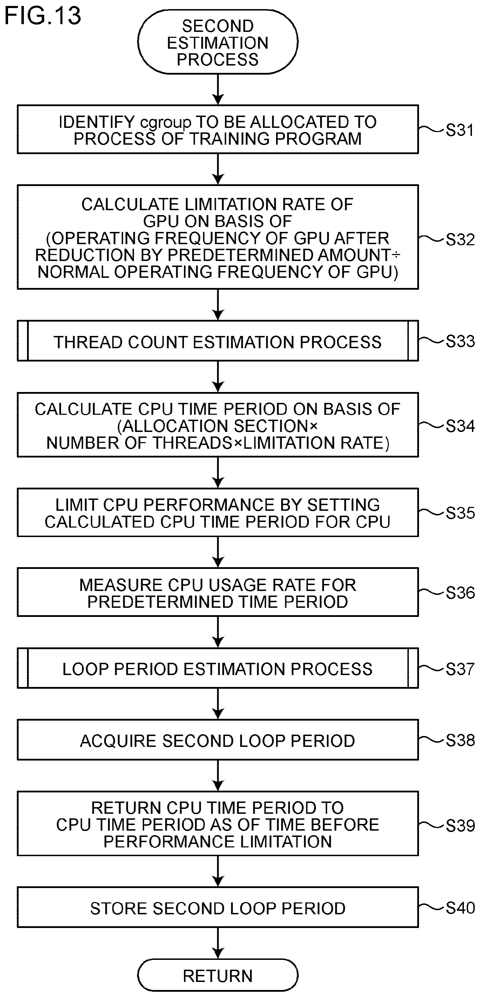

The second control unit 42 and the estimation unit 44 in the analysis unit 4 execute a second estimation process illustrated in FIG. 13, after the first estimation process is executed (Step S2). The second estimation process is a process of estimating the second loop period in the state where the CPU performance has been limited.

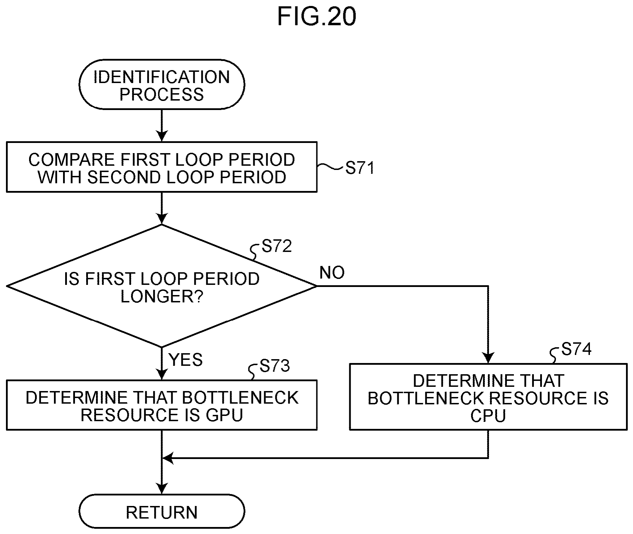

The identification unit 45 in the analysis unit 4 executes an identification process illustrated in FIG. 20, after the second estimation process is executed (Step S3). The identification process is a process of identifying a bottleneck resource on the basis of a result of comparison between the first loop period and the second loop period. After the identification process is executed, the presentation unit 46 in the analysis unit 4 presents presented information indicating the bottleneck resource identified, to a user (Step S4) and ends the processing operation illustrated in FIG. 10.

The processing sequence of Step S1 and Step S2 in the analysis process is not limited to this example, and may be modified as appropriate. That is, the first estimation process of Step S1 may be executed after the second estimation process of Step S2, or the first estimation process of Step S1 and the second estimation process of Step S2 may be executed in parallel.

FIG. 11 is a flowchart illustrating an example of processing operation of the analysis unit 4, the processing operation being related to the first estimation process. The first control unit 41 in the analysis unit 4 limits the GPU performance by lowering the operating frequency of the GPU 12 by a predetermined amount (Step S11). Lowering by a predetermined amount is, for example, a process of limiting the GPU performance by lowering the normal operating frequency of the GPU 12 by 20%.

In the state where the GPU performance has been limited, the measurement unit 43 in the analysis unit 4 measures the CPU usage rate for a predetermined time period during execution of the training program 5 (Step S12). On the basis of results of the measurement of the CPU usage rate for the predetermined time period, the estimation unit 44 in the analysis unit 4 executes a loop period estimation process (Step S13). The loop period estimation process at Step S13 is a process of estimating the first loop period by using the CPU usage rates for the predetermined time period during the execution of the training program 5 in the state where the GPU performance has been limited. The estimation unit 44 acquires the first loop period estimated by the loop period estimation process (Step S14).

After acquiring the first loop period, the first control unit 41 returns the operating frequency of the GPU 12 to the operating frequency of the GPU 12 as of the time before the limitation of the GPU performance (Step S15). The estimation unit 44 then stores the first loop period acquired, into the memory 13 (Step S16). The first control unit 41 then ends the processing operation for the first estimation process illustrated in FIG. 11 and proceeds to the second estimation process at Step S2 in FIG. 10.

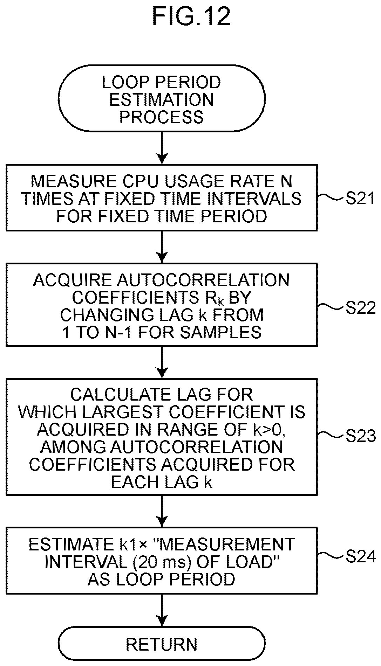

FIG. 12 is a flowchart illustrating an example of processing operation of the analysis unit 4, the processing operation being related to the loop period estimation process. The measurement unit 43 in the analysis unit 4 measures the CPU usage rate N times for a fixed time period and at fixed time intervals (Step S21). The estimation unit 44 in the analysis unit 4 acquires autocorrelation coefficients $R_k$ by changing the lag k from 1 to N-1 for the measurement samples acquired by the measurement unit 43 (Step S22).

The estimation unit 44 calculates the lag $(k_1)$ for which the largest coefficient is acquired in the range of k > 0, among the autocorrelation coefficients acquired per lag k (Step S23). On the basis of $<k_1 \times$ load measurement interval>, the estimation unit 44 estimates the loop period (Step S24) and ends the processing operation illustrated in FIG. 12. Processing then proceeds to Step S14 illustrated in FIG. 11 or Step S38 illustrated in FIG. 13.

In a case where the loop period estimation process is executed from Step S12 of the first estimation process in FIG. 11, the analysis unit 4 measures the CPU usage rates for the predetermined time period in the state where the GPU performance has been limited, and estimates the first loop period on the basis of the CPU usages for the predetermined time period.

Furthermore, in a case where the loop period estimation process is executed from Step S36 of the second estimation process in FIG. 13, the analysis unit 4 measures the CPU usage rates for the predetermined time period in the state where the CPU performance has been limited, and estimates the second loop period on the basis of the CPU usages for the predetermined time period.

FIG. 13 is a flowchart illustrating an example of processing operation of the analysis unit 4, the processing operation being related to the second estimation process. The second control unit 42 in the analysis unit 4 identifies cgroups to be allocated to processes of the training program 5 (Step S31). On the basis of (operating frequency of GPU 12 after limitation that is after reduction by predetermined amount ÷ operating frequency of GPU 12 before limitation), the second control unit 42 calculates the limitation rate of the GPU 12 (Step S32).

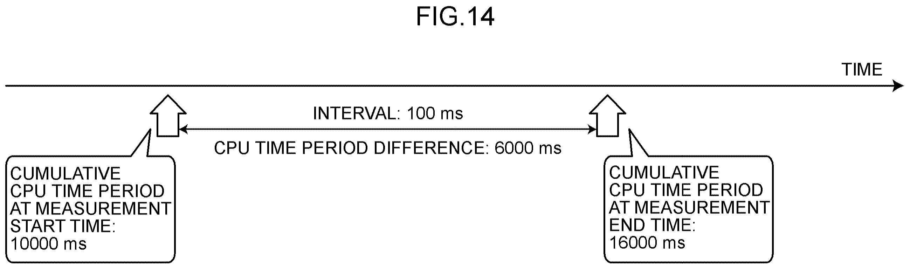

After calculating the limitation rate for the GPU 12, the second control unit 42 executes a thread count estimation process illustrated in FIG. 14 (Step S33). The thread count estimation process is, for example, a process of estimating the number of threads for the CPU 11 used in a process of the training program 5.

On the basis of <allocation section × number of threads × limitation rate>, the second control unit 42 calculates the CPU time period corresponding to the amount of limitation on the performance of the CPU 11 (Step S34). The second control unit 42 limits the CPU performance by setting the calculated CPU time period for the CPU 11 (Step S35).

The measurement unit 43 measures the CPU usage rates for the predetermined time period in the state where the CPU performance has been limited (Step S36). By using results of the measurement of the CPU usage rate for the predetermined time period, the estimation unit 44 executes the loop period estimation process illustrated in FIG. 12 (Step S37). The loop period estimation process at Step S37 is a process of estimating the second loop period by using the CPU usages for the predetermined time period during the execution of the training program 5 in the state where the CPU performance has been limited.

After executing the loop period estimation process at Step S37, the estimation unit 44 acquires the second loop period (Step S38).

The second control unit 42 returns the CPU time period as of the time after the limitation of the performance of the CPU 11, to the CPU time period as of the time before the limitation of the performance (Step S39). The estimation unit 44 stores the second loop period acquired, into the memory 13 (Step S40), ends the processing operation illustrated in FIG. 13, and processing then proceeds to the identification process of Step S3 in FIG. 10.

FIG. 14 is a diagram illustrating an example of a method of acquiring a cumulative CPU time period at a measurement start time and a cumulative CPU time period at a measurement end time. In FIG. 14, for example, in a case where a section time period is 100 ms, the cumulative CPU time period at the measurement start time is 1000 ms, and the cumulative CPU time period at the measurement end time is 16000 ms, the difference between the cumulative CPU time periods is 6000 ms.

Therefore, on the basis of (cumulative CPU time period at measurement end time - cumulative CPU time period at measurement start time) ÷ section time period), that is, (6000 ms ÷ 100 ms), the second control unit 42 can calculate the number of threads used in execution of the workload as 60 threads.

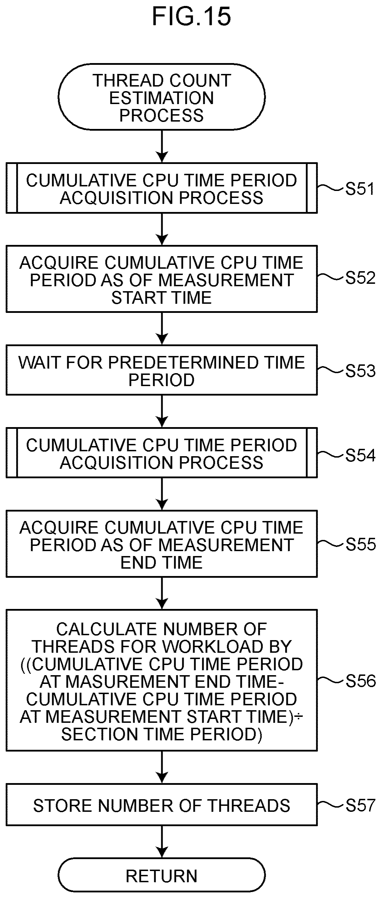

FIG. 15 is a flowchart illustrating an example of processing operation of the analysis unit 4, the processing operation being related to the thread count estimation process. The second control unit 42 in the analysis unit 4 executes a cumulative CPU time period acquisition process for acquiring a cumulative CPU time period as of the present point in time (Step S51).

After executing the cumulative CPU time period acquisition process at Step S51, the second control unit 42 acquires a cumulative CPU time period as of the measurement start time (Step S52). After acquiring the cumulative CPU time period as of the measurement start time, the second control unit 42 waits for a predetermined time period (Step S53).

The second control unit 42 executes the cumulative CPU time period acquisition process for acquiring a cumulative CPU time period as of the present after waiting for the predetermined time period (Step S54). After executing the cumulative CPU time period acquisition process at Step S54, the second control unit 42 acquires a cumulative CPU time period as of the measurement end time (Step S55).

After acquiring the cumulative CPU time period as of the measurement end time, the second control unit 42 calculates the number of threads of a workload of the training program 5 on the basis of (<cumulative CPU time period at measurement end time - cumulative CPU time period at measurement start time> ÷ section time period) (Step S56). The second control unit 42 stores the number of threads calculated, into the memory 13 (Step S57) and ends the processing operation illustrated in FIG. 15.

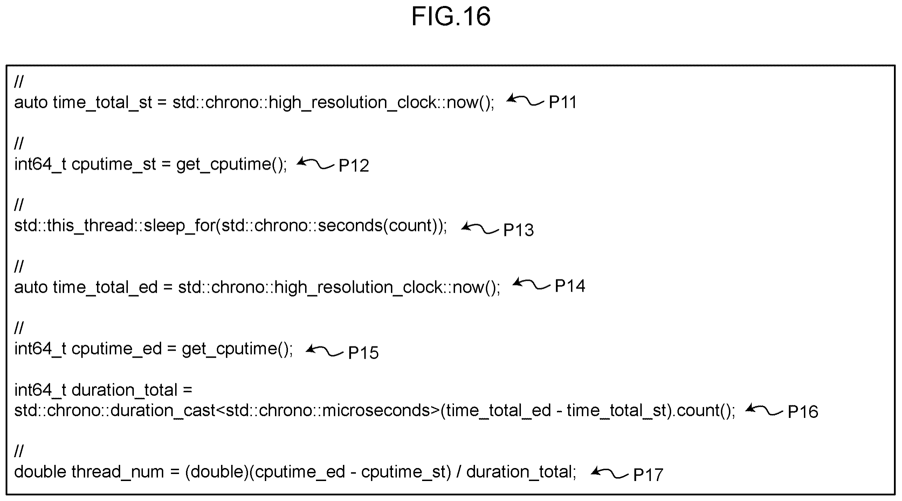

FIG. 16 is a diagram illustrating an example of an API related to the thread count estimation process. Acquisition of cumulative CPU time periods is supported in various programming languages. For example, in the C++ language, a cumulative CPU time period can be acquired using the API (application programming interface) illustrated in FIG. 16.

The second control unit 42 acquires a measurement start time (P11). The second control unit 42 acquires a cumulative CPU time period as of the measurement start time (P12). The second control unit 42 waits for a predetermined time period from the measurement start time (P13). The second control unit 42 acquires a measurement end time (P14). The second control unit 42 acquires a cumulative CPU time period as of the measurement end time (P15). The second control unit 42 acquires a cumulative CPU time period that is a difference, (cumulative CPU time period at measurement end time - cumulative CPU time period at measurement start time) (P16). The second control unit 42 calculates the number of threads on the basis of (cumulative CPU time period ÷ section time period) (P17).

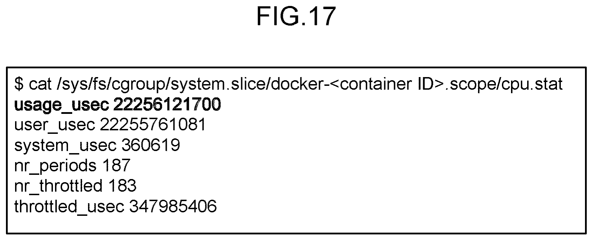

FIG. 17 is a diagram illustrating an example of a cpu.stat file. The cpu.stat file is written in a format illustrated in FIG. 17. The first part of a file path, "/sys/fs/cgroup/system.slice/docker-<container ID>", is a path to a cgroup to which the training program 5 has been allocated. In a container system other than Docker (such as Podman or Slurm), assignment to a different path may be carried out. Furthermore, the final part of the file path, "cpu.stat", is common regardless of the type of container system. The cumulative CPU time period is updated cumulatively in a field, "usage_usec".

In a case where a CPU time period is allocated to an allocation section, the cgroup function is exposed on a file system and is implemented through reading from and writing to a specific file. Limiting a CPU time period corresponds to writing into a file, as described below.

A cgroup is set by writing the following values in the file mentioned above. The units of CPU time period and allocation section are microseconds (μs). As described above, because the units of CPU time period and allocation section are milliseconds (ms), the numerical value of a CPU time period allocated to an allocation section is multiplied by 1000.

Furthermore, a sudo command and an echo command for writing the CPU time period to be allocated within an allocation section using a shell script are combined as follows.

$ sudo sh -c "echo '3219000 100000' > \ /sys/fs/cgroup/system.slice/docker-<container ID>.scope/cpu.max"

Furthermore, in a case where the limitation on the CPU performance is to be removed, "max" is specified for the "CPU time period" to be allocated in the allocation section. The following corresponds to a case where the CPU time period within the allocation section is to be written using a shell script.

$ sudo sh -c "echo 'max 100000' > \ /sys/fs/cgroup/system.slice/docker-<container ID>.scope/cpu.max"

The second control unit 42 acquires the cumulative CPU time period as of the measurement start time from "usage_usec" as of the measurement start time in the cpu.stat file. Furthermore, the second control unit 42 acquires the cumulative CPU time period as of the measurement end time from "usage_usec" as of the measurement end time in the cpu.stat file. The second control unit 42 acquires a cumulative CPU time period that is a difference between the cumulative CPU time period at the measurement end time and the cumulative CPU time period at the measurement start time.

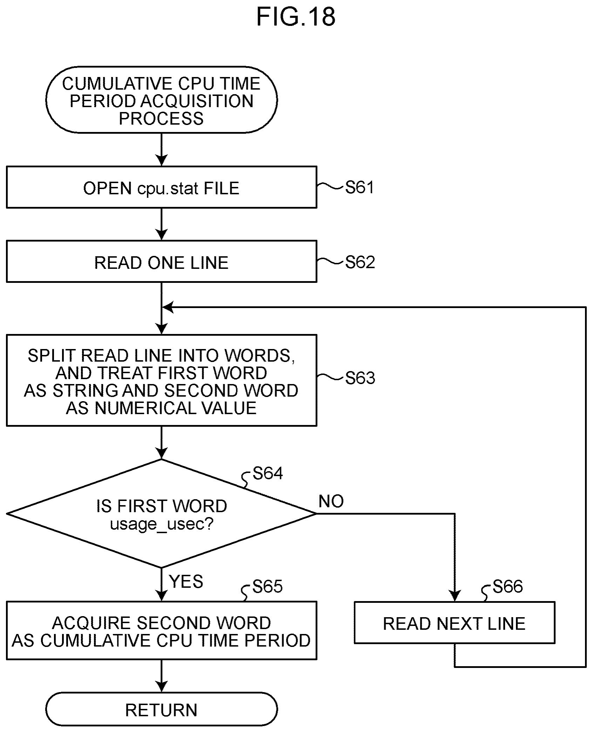

FIG. 18 is a flowchart illustrating an example of processing operation of the analysis unit 4, the processing operation being related to the cumulative CPU time period acquisition process. The second control unit 42 in the analysis unit 4 opens the cpu.stat file (Step S61), and reads one line from the file opened (Step S62).

The second control unit 42 splits the read line into words and treats the first word as a string and the second word as a numerical value (Step S63). The second control unit 42 determines whether or not the first word is "usage_usec" (Step S64). In a case where the first word is "usage_usec" (Step S64: Yes), the second control unit 42 acquires the second word as the cumulative CPU time period (Step S65), and ends the processing operation illustrated in FIG. 18.

In a case where the first word is not "usage_usec" (Step S64: No), the second control unit 42 reads the next line (Step S66), and returns to Step S63 for splitting a line into words.

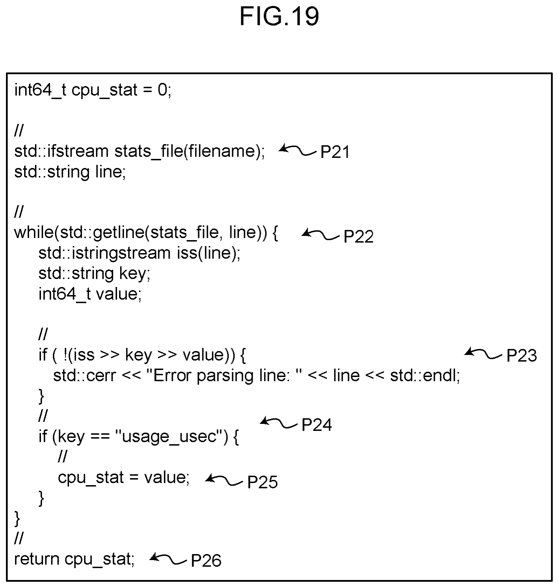

FIG. 19 is a diagram illustrating an example of an API related the cumulative CPU time period acquisition process. The second control unit 42 is able to acquire a cumulative CPU time period via a file system. A program illustrated in FIG. 19 is in the C++ language. A path to the above mentioned cpu.stats file is specified in the filename part.

The second control unit 42 opens the cpu.stat file (P21). The second control unit 42 reads one line from the file opened (P22). The second control unit 42 splits the read line into words and treats the first word as a string and the second word as a numerical value (P23).

In a case where the first word is "usage_usec" (P24), the second control unit 42 acquires the second word as the cumulative CPU time period (P25), and returns the cumulative CPU time period (P26).

FIG. 20 is a flowchart illustrating an example of processing operation of the analysis unit 4, the processing operation being related to the identification process. The identification process illustrated in FIG. 20 is the identification process at Step S3 in FIG. 10. The identification unit 45 in the analysis unit 4 compares the first loop period with the second loop period (Step S71). On the basis of a result of this comparison, the identification unit 45 determines whether or not the first loop period is longer (Step S72).

In a case where the first loop period is longer (Step S72: Yes), the identification unit 45 determines that the GPU 12 is the bottleneck computing resource (Step S73), ends the processing operation illustrated in FIG. 20, and processing proceeds to the processing at Step S4 in FIG. 10.

In a case where the first loop period is not longer (Step S72: No), the identification unit 45 determines that the CPU 11 is the bottleneck computing resource (Step S74), and ends the processing operation illustrated in FIG. 20. Processing is then advanced to the processing at Step S4 in FIG. 10.

C. Effects

The estimation unit 44 of the information processing apparatus 1 according to the embodiment estimates a first loop period during execution of the training program 5 in a state where a limitation has been placed on the GPU performance. Furthermore, by using the cgroup function and without changing the operating frequency, the second control unit 42 places a limitation on the CPU performance according to the number of threads used and the limitation rate of the GPU performance. After removing the limitation on the GPU performance, the estimation unit 44 estimates a second loop period during execution of the training program 5 in a state where the CPU performance has been limited. The identification unit 45 compares the first loop period with the second loop period, and identifies one of the CPU 11 and the GPU 12 as a bottleneck resource that is the computing resource with a longer loop period. As a result, the bottleneck resource in the execution environment of the training program 5 is able to be identified without a change to the operating frequency of the CPU 11. A bottleneck computing resource is able to be identified readily for execution of the training program 5 and an optimal computing machine configuration for executing the training program 5 is thus able to be constructed. As a result, the efficiency of training of the machine learning model is able to be improved.

The first control unit 41 limits the GPU performance by lowering the operating frequency of the GPU 12 by a predetermined amount. The second control unit 42 calculates the limitation rate of the GPU 12 for the case where the operating frequency of the GPU 12 is lowered by the predetermined amount and limits the performance of the CPU 11 according to the limitation rate. The estimation unit 44 estimates the first loop period during execution of the training program 5 in the state where the GPU performance has been limited and estimates the second loop period during execution of the training program 5 in the state where the CPU performance has been limited. As a result, the bottleneck resource in the execution environment of the training program 5 is able to be identified without a change to the operating frequency of the CPU 11.

The second control unit 42 limits the CPU performance by shortening the CPU time period to be allocated to the training program for each allocation section, according to the limitation rate. As a result, the CPU performance is able to be limited without a change to the operating frequency of the CPU 11.

The second control unit 42 limits the CPU performance by shortening the CPU time period, on the basis of the limitation rate for the GPU 12, the allocation section, and the number of threads of the CPU 11 used for the training program 5. As a result, the CPU performance is able to be limited without a change to the operating frequency of the CPU 11.

The second control unit 42 limits the CPU performance by shortening the CPU time period using the cgroup function, according to the limitation rate for the GPU 12. As a result, the CPU performance is able to be limited without a change to the operating frequency of the CPU 11.

The presentation unit 46 presents presented information including the bottleneck resource identified. As a result, a user is able to identify the bottleneck resource in the execution environment of the training program 5 without changing the operating frequency of the CPU 11 and to readily get a grasp of the optimal calculating machine configuration for executing the training program 5.

The method of limiting the CPU performance by using the cgroup function enables the CPU performance to be limited even in the environment where the operating frequency of the CPU 11 is unable to be set by software. Furthermore, the cgroup function enables the CPU performance to be limited more finely than changing the operating frequency of the CPU 11. Furthermore, the cgroup function enables the CPU performance to be limited in units of applications targeted.

Furthermore, limitation of the CPU performance by a change to the operating frequency affects the overall performance of the system. Therefore, processing other that that for the application, for example, data processing for the network and the storage is also affected. As a result, isolating the bottleneck becomes difficult because whether a slowdown in processing for an application occurred or a slowdown was caused by other factors is unable to be determined. In contrast, when the CPU performance is limited using the cgroup function, only the CPU performance within the cgroup to which the target application is allocated is able to be limited. As a result, in a case where the CPU performance available to the application is reduced, it can be clearly concluded that the CPU portion of the application's processing is the bottleneck.

Furthermore, convenience for a cloud service provider is able to be increased because the bottleneck computing resource is able to be readily identified using the CPU usage rate, which is data that the cloud service provider is able to observe, without modifying the customer's program. Furthermore, presenting information on the bottleneck computing resource to the customer enables the service's added value to be increased and customer satisfaction to be improved.

By using autocorrelation coefficients, the estimation unit 44 is able to readily estimate a loop period.

D. Others

Techniques disclosed by the present application are not to be limited to the above described embodiment, and may be embodied by various modification without departing from the gist of the embodiment. Each component and each process in the embodiment may be selected or eliminated as needed or may be combined as appropriate.

For example, in the above described embodiment, which one of the CPU 11 and the GPU 12 is the bottleneck (target to be improved) is determined for the hardware platform 10 including the two processor elements (computing resources), the CPU 11 and the GPU 12. However, bottle neck resources are not limited to the CPU 11 and the GPU 12 and may be modified as appropriate.

Computing resources other than a CPU and a GPU, such as microprocessing unit (MPU) or an accelerated processing unit (APU), may be included as a computing resource. Furthermore, three or more computing resources may be included, and a bottleneck computing resource (target to be improved) may be determined from these three or more computing resources.

Furthermore, a bottleneck hardware element may be determined by application of a similar technique to hardware elements other than computing elements.

Furthermore, in the above described embodiment, the CPU 11 that executes the training program 5 executes the analysis program 4A, but the embodiment is not limited to this example. A processor prepared separately from the CPU 11, or a processor installed in a computer provided separately from the hardware platform 10 may be caused to execute the analysis program 4A.

Furthermore, in the above described embodiment, the estimation unit 44 estimates a loop period of the training program 5 using autocorrelation coefficients, but the embodiment is not limited to this example. For example, the estimation unit 44 may estimate a loop period using any other known technique, for example, by using a Fourier series. Furthermore, the embodiment disclosed may be implemented or manufactured by those skilled in the art on the basis of the disclosure herein.

**Claims**

1. A control program that causes a processor to execute a process comprising:

   estimating, during execution of a training program for a machine learning model using a first computing resource and a second computing resource, first performance for a workload of the training program by placing a limitation on performance of the first computing resource;
   estimating, after the limitation on the performance of the first computing resource is removed and during execution of the training program, second performance for a workload of the training program by limiting performance of the second computing resource according to a ratio at which the performance of the first computing resource was limited; and
   identifying, based on a result of comparison between the first performance and the second performance, which one of the first computing resource and the second computing resource is a bottleneck resource.

2. The control program according to claim 1, wherein the identifying the bottleneck resource includes identifying, as the bottleneck resource, the first computing resource or the second computing resource that resulted in a lower one of the first performance and the second performance.

3. The control program according to claim 1, wherein

   the estimating the first performance includes estimating the first performance by limiting the performance of the first computing resource by lowering an operating frequency of the first computing resource by a predetermined amount, and
   the estimating the second performance includes estimating the second performance by: calculating a limitation rate for the first computing resource for a case where the operating frequency of the first computing resource is lowered by the predetermined amount; and limiting the performance of the second computing resource according to the limitation rate, using a cgroup function.

4. The control program according to claim 3, wherein the limiting the performance of the second computing resource includes limiting the performance of the second computing resource by shortening, according to the limitation rate, an operating time period of the second computing resource, the operating time period that is to be allocated to the training program for each predetermined allocation section.

5. The control program according to claim 4, wherein the limiting the performance of the second computing resource includes limiting the performance of the second computing resource by shortening the operation time period of the second computing resource based on the limitation rate for the first computing resource, the allocation section, and the number of threads of the second computing resource used for the training program.

6. The control program according to claim 1, wherein

the estimating the first performance includes estimating, as the first performance, a first loop period in which a workload of the training program is executed, by limiting the performance of the first computing resource, and the estimating the second performance includes estimating, as the second performance, a second loop period in which a workload of the training program is executed, by limiting the performance of the second computing resource using a cgroup function.

7. The control program according to claim 1, wherein the first computing resource is a graphics processing unit (GPU), and the second computing resource is a central processing unit (CPU).

8. The control program according to claim 7, wherein the central processing unit does processes including presenting the bottleneck resource identified.

9. An information processing apparatus comprising:

a first control unit configured to place a limitation on, during execution of a training program for a machine learning model using a first computing resource and a second computing resource, performance of the first computing resource;
a second control unit configured to limit, after removing the limitation on the performance of the first computing resource and during execution of the training program, performance of the second computing resource according to a ratio at which the performance of the first computing resource was limited;
an estimation unit configured to estimate first performance for a workload of the training program in a state where the performance of the first computing resource has been limited by the first control unit and estimate second performance for a workload of the training program in a state where the performance of the second computing resource has been limited by the second control unit; and
an identification unit configured to identify, based on a result of comparison between the first performance and the second performance, which one of the first computing resource and the second computing resource is a bottleneck resource.

10. The information processing apparatus according to claim 9, wherein the identification unit identifies, as the bottleneck resource, the first computing resource or the second computing resource that resulted in a lower one of the first performance and the second performance.

11. The information processing apparatus according to claim 10, wherein

the first control unit limits the performance of the first computing resource by lowering an operating frequency of the first computing resource by a predetermined amount, and
the second control unit calculates a limitation rate for the first computing resource for a case where the operating frequency of the first computing resource is lowered by the predetermined amount, and limits the performance of the second computing resource according to the limitation rate, using a cgroup function.

12. A control method carried out by an information processing apparatus(1), comprising executing a training program for a machine learning model using a first computing resource and a second computing resource, wherein the information processing apparatus executes processing of:

estimating first performance for a workload of the training program by placing a limitation on performance of the first computing resource during execution of the training program;

estimating, after the limitation on the performance of the first computing resource is removed and during execution of the training program, second performance for a workload of the training program by limiting performance of the second computing resource according to a ratio at which the performance of the first computing resource was limited; and

identifying, based on a result of comparison between the first performance and the second performance, which one of the first computing resource and the second computing resource is a bottleneck resource.

13. The control method according to claim 12, wherein the identifying the bottleneck resource includes identifying, as the bottleneck resource, the first computing resource or the second computing resource that resulted in a lower one of the first performance and the second performance.

14. The control method according to claim 12, wherein

the estimating the first performance includes estimating the first performance by limiting the performance of the first computing resource by lowering an operating frequency of the first computing resource by a predetermined amount, and

the estimating the second performance includes estimating the second performance by: calculating a limitation rate for the first computing resource for a case where the operating frequency of the first computing resource is lowered by the predetermined amount, and limiting the performance of the second computing resource according to the limitation rate, using a cgroup function.

# FIG.1

1

| TRAINING PROGRAM | 5 | ANALYSIS PROGRAM | 4A |

OS, LIBRARY, AND FRAMEWORK — 3

10

| CPU | 11 | GPU | 12 |

| MEMORY | 13 | STORAGE | 14 |

COMMUNICATION INTERFACE — 15

# FIG.2

ANALYSIS PROGRAM — 4A

FIRST CONTROL PROGRAM — 4A1

SECOND CONTROL PROGRAM — 4A2

MEASUREMENT PROGRAM — 4A3

ESTIMATION PROGRAM — 4A4

IDENTIFICATION PROGRAM — 4A5

PRESENTATION PROGRAM — 4A6

# FIG.3

ANALYSIS UNIT ⌇4

FIRST CONTROL UNIT ⌇41

SECOND CONTROL UNIT ⌇42

MEASUREMENT UNIT ⌇43

ESTIMATION UNIT ⌇44

IDENTIFICATION UNIT ⌇45

PRESENTATION UNIT ⌇46

# FIG.4

CPU

UNLIMITED

LIMITED

cgroup_root

cgroup_limited

| PROCESS 1 | PROCESS 2 | ...... | PROCESS N |

| PROCESS C1 | PROCESS C2 |

EP 4 752 723 A1

# FIG.5A

LIMITATION FOR SINGLE THREAD

CPU TIME PERIOD
80 ms

ALLOCATION
SECTION
100 ms

# FIG.5B

LIMITATION FOR MULTIPLE THREADS (TWO THREADS)

CPU TIME PERIOD
80 ms

ALLOCA-
TION OF
CPU TIME
PERIOD
OF 160 ms
FOR TWO
THREADS

ALLOCATION
SECTION
100 ms

## FIG.6

ONE LOOP

CPU USAGE RATE OF OVERALL SYSTEM

CPU USAGE RATE OF MAIN THREAD

CPU USAGE RATE OF SUBTHREAD

ANNOTATION INFORMATION

iter_time | 14910 [69.057 ms]

opt_tiime [67.248 ms]

EP 4 752 723 A1

## FIG.7

### RNNT CPU LOAD

## FIG.8

# FIG.9

50

```
$ analyze_training_performance    P1

start analyzing...

Estimated interval when CPU clock is down: 600ms  }
Estimated interval when GPU clock is down: 540ms  } P2

CPU performance may limit the total performance.    P3

$
```

# FIG.10

```
ANALYSIS
PROCESS

FIRST ESTIMATION PROCESS          ~S1

SECOND ESTIMATION PROCESS         ~S2

IDENTIFCATION PROCESS             ~S3

PRESENT BOTTLENECK                ~S4

END
```

# FIG.11

FIRST ESTIMATION POCESS

LIMIT GPU PERFORMANCE BY LOWERING OPERATING FREQUENCY OF GPU BY PREDETERMINED AMOUNT — S11

MEASURE CPU USAGE RATE FOR PREDETERMINED TIME PEROD — S12

LOOP PERIOD ESTIMATION PROCESS — S13

ACQUIRE FIRST LOOP PERIOD — S14

RETURN OPERATING FREQUENCY OF GPU TO OPERATING FREQUENCY AS OF TIME BEFORE PERFORMANCE LIMITATION — S15

STORE FIRST LOOP PERIOD — S16

RETURN

# FIG.12

LOOP PERIOD
ESTIMATION
PROCESS

↓

MEASURE CPU USAGE RATE N
TIMES AT FIXED TIME INTERVALS
FOR FIXED TIME PERIOD — S21

↓

ACQUIRE AUTOCORRELATION
COEFFICIENTS $R_k$ BY
CHANGING LAG k FROM
1 TO N-1 FOR SAMPLES — S22

↓

CALCULATE LAG FOR
WHICH LARGEST COEFFICIENT IS
ACQUIRED IN RANGE OF k>0,
AMONG AUTOCORRELATION
COEFFICIENTS ACQUIRED FOR
EACH LAG k — S23

↓

ESTIMATE k1× "MEASUREMENT
INTERVAL (20 ms) OF LOAD"
AS LOOP PERIOD — S24

↓

RETURN

# FIG.13

```
        ┌─────────────────┐
        │     SECOND      │
        │   ESTIMATION    │
        │    PROCESS      │
        └────────┬────────┘
                 ▼
```

IDENTIFY cgroup TO BE ALLOCATED TO PROCESS OF TRAINING PROGRAM — S31

CALCULATE LIMITATION RATE OF GPU ON BASIS OF (OPERATING FREQUENCY OF GPU AFTER REDUCTION BY PREDETERMINED AMOUNT÷ NORMAL OPERATING FREQUENCY OF GPU) — S32

THREAD COUNT ESTIMATION PROCESS — S33

CALCULATE CPU TIME PERIOD ON BASIS OF (ALLOCATION SECTION× NUMBER OF THREADS×LIMITATION RATE) — S34

LIMIT CPU PERFORMANCE BY SETTING CALCULATED CPU TIME PERIOD FOR CPU — S35

MEASURE CPU USAGE RATE FOR PREDETERMINED TIME PERIOD — S36

LOOP PERIOD ESTIMATION PROCESS — S37

ACQUIRE SECOND LOOP PERIOD — S38

RETURN CPU TIME PERIOD TO CPU TIME PERIOD AS OF TIME BEFORE PERFORMANCE LIMITATION — S39

STORE SECOND LOOP PERIOD — S40

```
        ┌─────────────────┐
        │     RETURN      │
        └─────────────────┘
```

# FIG.14

TIME

INTERVAL: 100 ms

CPU TIME PERIOD DIFFERENCE: 6000 ms

CUMULATIVE
CPU TIME PERIOD
AT MEASUREMENT
START TIME:
10000 ms

CUMULATIVE
CPU TIME PERIOD
AT MEASUREMENT
END TIME:
16000 ms

EP 4 752 723 A1

# FIG.15

THREAD COUNT
ESTIMATION
PROCESS

CUMULATIVE CPU TIME PERIOD
ACQUISITION PROCESS — S51

ACQUIRE CUMULATIVE CPU TIME
PERIOD AS OF MEASUREMENT
START TIME — S52

WAIT FOR PREDETERMINED TIME
PERIOD — S53

CUMULATIVE CPU TIME PERIOD
ACQUISITION PROCESS — S54

ACQUIRE CUMULATIVE CPU TIME
PERIOD AS OF MEASUREMENT
END TIME — S55

CALCULATE NUMBER OF
THREADS FOR WORKLOAD BY
((CUMULATIVE CPU TIME PERIOD
AT MASUREMENT END TIME-
CUMULATIVE CPU TIME PERIOD
AT MEASUREMENT START TIME)÷
SECTION TIME PERIOD) — S56

STORE NUMBER OF THREADS — S57

RETURN

# FIG.16

```
//
auto time_total_st = std::chrono::high_resolution_clock::now();      P11

//
int64_t cputime_st = get_cputime();      P12

//
std::this_thread::sleep_for(std::chrono::seconds(count));      P13

//
auto time_total_ed = std::chrono::high_resolution_clock::now();      P14

//
int64_t cputime_ed = get_cputime();      P15

int64_t duration_total =
std::chrono::duration_cast<std::chrono::microseconds>(time_total_ed - time_total_st).count();      P16

//
double thread_num = (double)(cputime_ed - cputime_st) / duration_total;      P17
```

# FIG.17

```
$ cat /sys/fs/cgroup/system.slice/docker-<container ID>.scope/cpu.stat
usage_usec 22256121700
user_usec 22255761081
system_usec 360619
nr_periods 187
nr_throttled 183
throttled_usec 347985406
```

# FIG.18

```
    ┌─────────────────────────┐
    │  CUMULATIVE CPU TIME     │
    │  PERIOD ACQUISITION      │
    │  PROCESS                 │
    └─────────────────────────┘
                │
                ▼
    ┌─────────────────────────┐
    │   OPEN cpu.stat FILE     │───S61
    └─────────────────────────┘
                │
                ▼
    ┌─────────────────────────┐
    │     READ ONE LINE        │───S62
    └─────────────────────────┘
                │
                ▼
    ┌─────────────────────────┐
    │ SPLIT READ LINE INTO     │
    │ WORDS, AND TREAT FIRST   │───S63
    │ WORD AS STRING AND       │
    │ SECOND WORD AS           │
    │ NUMERICAL VALUE          │
    └─────────────────────────┘
                │
                ▼
            ╱───────╲  S64
           ╱ IS FIRST ╲    NO
          ╱  WORD      ╲──────────┐
          ╲ usage_usec? ╱         │
           ╲           ╱          ▼
            ╲─────────╱     ┌──────────────┐
                │           │  READ NEXT   │───S66
              YES  S65      │    LINE      │
                │           └──────────────┘
                ▼
    ┌─────────────────────────┐
    │ ACQUIRE SECOND WORD AS   │
    │ CUMULATIVE CPU TIME      │
    │ PERIOD                   │
    └─────────────────────────┘
                │
                ▼
          ┌───────────┐
          │  RETURN   │
          └───────────┘
```

# FIG.19

```
int64_t cpu_stat = 0;

//
std::ifstream stats_file(filename);        P21
std::string line;

//
while(std::getline(stats_file, line)) {        P22
    std::istringstream iss(line);
    std::string key;
    int64_t value;

    //
    if ( !(iss >> key >> value)) {                    P23
        std::cerr << "Error parsing line: " << line << std::endl;
    }
    //                              P24
    if (key == "usage_usec") {
        //
        cpu_stat = value;    P25
    }
}
//
return cpu_stat;    P26
```

# FIG.20

```
        ┌─────────────────────┐
        │   IDENTIFICATION    │
        │      PROCESS        │
        └─────────────────────┘
                  │
                  ▼
    ┌─────────────────────────────┐
    │  COMPARE FIRST LOOP PERIOD  │ ～S71
    │  WITH SECOND LOOP PERIOD    │
    └─────────────────────────────┘
                  │
                  ▼
              ╱───────────╲  ⌐S72
            ╱               ╲
          ╱  IS FIRST LOOP   ╲      NO
        ╱     PERIOD          ╲───────────────┐
          ╲   LONGER?        ╱                │
            ╲               ╱                 │
              ╲───────────╱                   │
                  │                           │
                  │ YES                       ▼
                  │      ⌐S73          ⌐S74
    ┌─────────────────────────────┐   ┌─────────────────────────────┐
    │ DETERMINE THAT BOTTLENECK   │   │    DETERMINE THAT           │
    │    RESOURCE IS GPU          │   │ BOTTLENECK RESOURCE IS      │
    │                             │   │         CPU                 │
    └─────────────────────────────┘   └─────────────────────────────┘
                  │                           │
                  │◄──────────────────────────┘
                  ▼
        ┌─────────────────────┐
        │      RETURN         │
        └─────────────────────┘
```

**EUROPEAN SEARCH REPORT**

Application Number

EP 25 21 6149

## DOCUMENTS CONSIDERED TO BE RELEVANT

| Category | Citation of document with indication, where appropriate, of relevant passages | Relevant to claim |
|---|---|---|
| X | JP 2024 150304 A (FUJITSU FSAS INC) 23 October 2024 (2024-10-23) * paragraphs [0037], [0039], [0061] - [0072], [0087], [0090] * ----- | 1-14 |

**CLASSIFICATION OF THE APPLICATION (IPC)**

INV.
G06F9/50
G06N20/00

**TECHNICAL FIELDS SEARCHED (IPC)**

G06F
G06E
G06N

The present search report has been drawn up for all claims

| Place of search | Date of completion of the search | Examiner |
|---|---|---|
| The Hague | 25 March 2026 | Buzgan, C |

EPO FORM 1503 03.82 (P04C01)

## ANNEX TO THE EUROPEAN SEARCH REPORT
## ON EUROPEAN PATENT APPLICATION NO.

EP 25 21 6149

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2026

| Patent document cited in search report | Publication date | Patent family member(s) | Publication date |
|---|---|---|---|
| JP 2024150304 A | 23-10-2024 | NONE | |

For more details about this annex : see Official Journal of the European Patent Office, No. 12/82

**REFERENCES CITED IN THE DESCRIPTION**

**Patent documents cited in the description**

- JP 2021140264 A
- JP 2010250689 A
- JP 2018084994 A
- JP 7281908 A
- JP 2010218000 A